# EUROPÄISCHE PATENTSCHRIFT

(11) **EP 2 992 479 B1**
(45) Veröffentlichungstag und Bekanntmachung des Hinweises auf die Patenterteilung: **02.08.2017**
(21) Anmeldenummer: 14731570.9
(22) Anmeldetag: 10.06.2014
(51) Int. Cl.: G06F 21/60, B61L 23/00, B61L 29/00, B61L 29/22

(54) **VERFAHREN ZUM ANFORDERN EINES SPERRENS EINES GLEISABSCHNITTS UND EINER SPERRENRÜCKNAHME UND ANORDNUNG MIT EINEM KOMMUNIKATIONSGERÄT AN EINEM GLEISABSCHNITT**
METHOD FOR REQUESTING A CLOSURE OF A TRACK SECTION AND A CLOSURE REVOCATION AND ASSEMBLY HAVING A COMMUNICATION DEVICE ON A TRACK SECTION
PROCÉDÉ POUR DEMANDER UN BLOCAGE D'UN TRONÇON DE VOIE ET UNE ANNULATION DE BLOCAGE AINSI QUE DISPOSITIF AVEC UN APPAREIL DE COMMUNICATION SUR UN TRONÇON DE VOIE

(30) Priorität: 02.07.2013 DE 102013212849
(43) Veröffentlichungstag der Anmeldung: 09.03.2016
(73) Patentinhaber: Siemens Aktiengesellschaft, 80333 München (DE)
(72) Erfinder: SIEVERDING, Peter, 38159 Vechelde (DE)
(86) Internationale Anmeldenummer: PCT/EP2014/061995
(87) Internationale Veröffentlichungsnummer: WO 2015/000662

(56) Entgegenhaltungen:
- GB-A- 803 114
- KR-B1- 101 272 897
- US-A1- 2010 163 687

## Beschreibung

Die Erfindung betrifft ein Verfahren zum Anfordern eines Sperrens eines Gleisabschnitts und einer Sperrenrücknahme mittels eines von einem Kommunikationsgerät mit einem Monitor an dem Gleisabschnitt zu einem Stellwerk gesendeten Sperren-Signals und eines gesendeten Sperrenrücknahme-Signals.

Bei einem seit langem praktizierten, bekannten Verfahren dieser Art wird als Kommunikationsgerät ein Telefon benutzt, mit dem von einem an den Gleisabschnitt beispielsweise zu Reparaturarbeiten entsendeten Wartungstrupp ein Sperren-Signal für den Gleisabschnitt in Form eines Telefonanrufs an die Bedienzentrale des zuständigen Stellwerks übermittelt wird, um ein Sperren des Gleisabschnitts für Schienenfahrzeuge zu erreichen. Steht dem Nichts entgegen, wird von der Bedienzentrale des Stellwerks der Gleisabschnitt gesperrt und diese Sperrung dem Wartungstrupp telefonisch bestätigt. Entsprechend wird hinsichtlich der Sperrenrücknahme, also der Zurücknahme der Sperrung, vorgegangen. Dabei werden durchwegs nichtsichere Komponenten eingesetzt, und Sicherheit wird nur über Verfahrenssicherung erzeugt. Letztendlich findet eine Kommunikation mit Bestätigung nur über Sprache statt. Dies gilt auch dann, wenn zeitgemäß ein Kommunikationsgerät mit einem Monitor, wie beispielsweise ein Smartphone, verwendet wird.

Der Erfindung liegt die Aufgabe zugrunde, das bekannte Verfahren sicherer zu gestalten.

Zur Lösung dieser Aufgabe wird bei einem Verfahren der oben angegebenen Art erfindungsgemäß als erweitertes Stellwerk das Stellwerk mit einem Modul eingesetzt, wobei das Modul nach Art eines Chiptan-Servers vom Kommunikationsgerät her angewählt wird. Mit dem Monitor wird ein sicherer Rechner-Baustein nach Art eines Chiptan-Generators über eine optische Koppelstelle optisch gekoppelt, indem der sichere Rechner-Baustein vor den Monitor an eine dort elektronisch markierte Stelle gehalten wird. Die gesendeten Signale werden mittels des sicheren Rechner-Bausteins gesichert und das erweiterte Stellwerk erkennt die gesendeten und gesicherten Signale und sendet Bestätigungs-Signale zu dem sicheren Rechner-Baustein.

Ein wesentlicher Vorteil des erfindungsgemäßen Verfahrens wird darin gesehen, dass es aufgrund des mit dem Monitor optisch koppelbaren sicheren Rechner-Bausteins und des erweiterten Stellwerks eine sichere Übertragung des Sperren-Signals - und auch des Sperrenrücknahme-Signals - gewährleistet. Ein weiterer Vorteil besteht darin, dass das Sperren und die Sperrenrücknahme vergleichsweise weniger Zeit und Kosten benötigt. Außerdem bietet das erfindungsgemäße Verfahren den Vorteil, dass im Falle vorangemeldeter Reparatur und/oder Wartungsarbeiten an dem Gleisabschnitt das Sperren und die Sperrenrücknahme stellwerkseitig selbsttätig aufgrund der gesendeten und gesicherten Signale vorgenommen werden kann.

Die Erfindung betrifft auch eine Anordnung mit einem Kommunikationsgerät mit einem Monitor an einem Gleisabschnitt, das über eine Nachrichtenübertragungsstrecke mit einem Stellwerk zum Übertragen eines Sperren-Signals für den Gleisabschnitt und eines Sperrenrücknahme-Signals verbunden ist.
Eine solche Anordnung wird bei dem eingangs behandelten, bekannten Verfahren benutzt.

Um die bekannte Anordnung hinsichtlich ihrer Übertragungseigenschaften sicherer zu gestalten, ist erfindungsgemäß als erweitertes Stellwerk das Stellwerk mit einem Modul bereitgestellt, wobei das Modul nach Art eines Chiptan-Servers vom Komnunikationsgerät her anwählbar ist. Mit dem Monitor ist ein sicherer Rechner-Baustein nach Art eines Chiptan-Generators über eine optische Koppelstelle optisch koppelbar, indem der sichere Rechner-Baustein vor den Monitor an eine dort elektronisch markierte Stelle gehalten wird, und das erweiterte Stellwerk erkennt das Sperren-Signal und das Sperrenrücknahme-Signal und sendet Bestätigungs-Signale zu dem sicheren Rechner-Baustein.

Diese Anordnung weist sinngemäß die dieselben Vorteile auf, wie sie oben zu dem erfindungsgemäßen Verfahren aufgeführt sind.

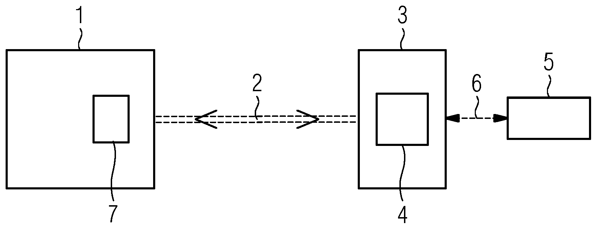

Zur weiteren Erläuterung der Erfindung ist in der Figur ein Ausführungsbeispiel einer erfindungsgemäßen Anordnung zur Durchführung des erfindungsgemäßen Verfahrens dargestellt.

In der Figur ist schematisch ein Stellwerk 1 gezeigt, mit dem über eine Nachrichtenübertragungsstrecke 2 ein Kommunikationsgerät 3 mit einem Monitor 4 verbindbar ist. Die Nachrichtenübertragungsstrecke 2 kann beispielsweise eine Funkverbindung oder eine Internetverbindung sein, und das Kommunikationsgerät kann beispielsweise als Smartphone oder als Tablet-Rechner ausgebildet sein.

Wie die Figur ferner erkennen lässt, gehört zu der dargestellten Anordnung ein sicherer Rechner-Baustein 5, der nach Art eines Chiptan-Generators ausgeführt ist. Chiptan-Generatoren sind inzwischen relativ weit verbreitet, weil sie von vielen Bankkunden beim Internetbanking benutzt werden, um Bankgeschäfte über das Internet sicher abwickeln zu können. Der Rechner-Baustein 5 als Chiptan-Generator ist mittels einer individuell an eine berechtigte Person ausghändigte Chipkarte aktivierbar und über eine optische Koppelstelle 6 mit dem Monitor 4 in einer Weise optisch koppelbar, wie es vom Gebrauch eines Chiptan-Generators her bekannt ist; der Rechner-Baustein 5 wird also bei seinem Gebrauch vor den Monitor 4 an eine dort elektronisch markierten Stelle gehalten.

Diese Handhabung des sicheren Rechner-Baustein 5 ist nur zielführend, wenn vorher über die Nachrichtenübertragungsstrecke 2 das Stellwerk 1 bzw. sein Modul 7 nach Art eines Chiptan-Servers vom Kommunikationsgerät 3 her angewählt und ein Sperren-Signal übertragen worden ist. Erkennt das Modul 7 sowohl das Kommunikationsgerät 3 als ein berechtigtes Kommunikationsgerät als auch das Sperren-Signal als ordnungsgemäß, dann wird auf dem Monitor 4 an der elektronische markierten Stelle als Information beispielsweise ein Piktogramm oder ein Balkencode angezeigt.

Diese Information wird durch den sicheren Rechner-Baustein 5 erfasst und in ein Authentifizierungssignal umgesetzt. Danach wird auf dem sicheren Rechner-Baustein 5 ein Bestätigungssignal angezeigt, mit dem das erfolgte Sperren des Gleisabschnitts auf das gesendete Sperren-Signal hin bestätigt wird.

Ist im Stellwerk 1 bzw. dessen Modul 7 vorher hinterlegt, dass der zu sperrende Gleisabschnitt beispielsweise wegen Reparatur- und/oder Wartungsarbeiten gesperrt werden kann, dann läuft das oben beschriebene Verfahren stellwerkseitig vollautomatisch ab.

Entsprechend wird vorgegangen, wenn nach Abschluss der Reparatur-und/oder Wartungsarbeiten vom Gleisabschnitt her ein Sperrenrücknahme-Signal zum Stellwerk 1 gesendet werden soll, um die Sperrung des Gleisabschnittes wieder aufzuheben.

## Patentansprüche

1. Verfahren zum Anfordern eines Sperrens eines Gleisabschnitts und einer Sperrenrücknahme mittels eines von einem Kommunikationsgerät (3) mit einem Monitor (4) an dem Gleisabschnitt zu einem Stellwerk gesendeten Sperren-Signals und eines gesendeten Sperrenrücknahme-Signals,
**dadurch gekennzeichnet, dass** als erweitertes Stellwerk (1) das Stellwerk mit einem Modul (7) eingesetzt wird, wobei das Modul (7) nach Art eines Chiptan-Servers vom Kommunikationsgerät (3) her angewählt wird,
mit dem Monitor (4) ein sicherer Rechner-Baustein (5) nach Art eines Chiptan-Generators über eine optische Koppelstelle (6) optisch gekoppelt wird, indem der sichere Rechner-Baustein (5) vor den Monitor (4) an eine dort elektronisch markierte Stelle gehalten wird,
die gesendeten Signale mittels des sicheren Rechner-Bausteins (5) gesichert werden und
das erweiterte Stellwerk (1) die gesendeten und gesicherten Signale erkennt und Bestätigungs-Signale zu dem sicheren Rechner-Baustein (5) sendet.

2. Anordnung mit einem Kommunikationsgerät(3) mit einem Monitor (4) an einem Gleisabschnitt, das über eine Nachrichtenübertragungsstrecke (2) mit einem Stellwerk zum Übertragen eines Sperren-Signals für den Gleisabschnitt und eines Sperrenrücknahme-Signals verbunden ist,
**dadurch gekennzeichnet, dass** als erweitertes Stellwerk (1) das Stellwerk mit einem Modul (7) bereitgestellt ist, wobei das Modul (7) nach Art eines Chiptan-Servers vom Kommunikationsgerät (3) her anwählbar ist,
mit dem Monitor (4) ein sicherer Rechner-Baustein (5) nach Art eines Chiptan-Generators über eine optische Koppelstelle (6) optisch koppelbar ist, indem der sichere Rechner-Baustein (5) vor den Monitor (4) an eine dort elektronisch markierte Stelle gehalten wird, und
das erweiterte Stellwerks (1) das Sperren- Signal und das Sperrenrücknahme-Signal erkennt und Bestätigungs-Signale zu dem sicheren Rechner-Baustein (5) sendet.

## Claims

1. Method for requesting a closure of a track section and a closure revocation by means of closure signal sent by a communication device (3) having a monitor (4) on the track section to an interlocking (1) and by means of a sent closure revocation signal,
**characterised in that**
the interlocking with a module (7) is used as an expanded interlocking (1), wherein the module (7) has been selected by the communication device (3) in the manner of a chipTAN server,
a secure computer chip (5) is coupled optically to the monitor (4) in the manner of a chipTAN generator via an optical coupling point (6) by the secure computer chip (5) being held in front of the monitor (4) at a point marked electronically there,
the sent signals are secured by means of the secure computer chip (5) and
the expanded interlocking (1) recognises the sent and secured signals and sends confirmation signals to the secure computer chip (5).

2. Assembly with a communication device (3) with a monitor (4) on a track section, which is connected via a communication link (2) to an interlocking for transmission of a closure signal for the track section and of a closure revocation signal,
**characterised in that**
the interlocking with a module (7) is provided as an expanded interlocking (1), wherein the module (7) is able to be selected by the communication device (3) in the manner of a chipTAN server,
a secure computer chip (5) is able to be coupled optically to the monitor (4) in the manner of a chipTAN generator via an optical coupling point (6) by the secure computer chip (5) being held in front of the monitor (4) at a point marked electronically there, and
the expanded interlocking (1) recognises the closure signal and the closure revocation signal and sends confirmation signals to the secure computer chip (5).

## Revendications

1. Procédé pour demander un blocage d'un tronçon de voie et une annulation du blocage, au moyen d'un signal de blocage et d'un signal d'annulation envoyés à un poste d'aiguillage par un appareil (3) de communication ayant un moniteur (4) sur le tronçon de voie,
**caractérisé en ce que**
l'on utilise comme poste (1) d'aiguillage ayant une extension le poste d'aiguillage ayant un module (7), le module (7) étant choisi à la manière d'un serveur chiptan à partir de l'appareil (3) de communication,
par le moniteur (4), on couple optiquement un module (5) d'ordinateur sécurisé à la manière d'un générateur chiptan, par l'intermédiaire d'un point (6) de couplage optique, en maintenant le module (5) d'ordinateur sécurisé devant le moniteur (4), en un point qui y est repéré électroniquement, on sécurise les signaux envoyés au moyen du module (5) d'ordinateur sécurisé et
le poste (1) d'aiguillage ayant une extension reconnaît les signaux envoyés et sécurisés et envoie des signaux de confirmation au module (5) d'ordinateur sécurisé.

2. Agencement comprenant un appareil (3) de communication ayant un moniteur (4) sur un tronçon de voie, qui est relié, par une section (2) de transmission de messages, à un poste d'aiguillage pour transmettre un signal de blocage du tronçon de voie et un signal d'annulation du blocage,
**caractérisé en ce que**
on met à disposition, comme poste (1) d'aiguillage ayant une extension, le poste d'aiguillage ayant un module (7), le module (7) pouvant être choisi à la façon d'un serveur chiptan à partir de l'appareil (3) de communication,
par le moniteur (4), un module (5) d'ordinateur sécurisé peut être couplé optiquement à la manière d'un générateur chiptan, par un point (6) de couplage optique, par le fait que le module (5) d'ordinateur sécurisé est maintenu devant le moniteur (4) en un point qui y est repéré électroniquement et
le poste (1) d'aiguillage ayant une extension reconnaît le signal de blocage et le signal d'annulation du blocage et envoie des signaux de confirmation au module (5) d'ordinateur sécurisé.
